(19) Europäisches Patentamt
European Patent Office
Office européen des brevets

(11) Publication number: **0 443 836 A2**

# EUROPEAN PATENT APPLICATION

(12)

(21) Application number: **91301351.2**

(22) Date of filing: **20.02.91**

(51) Int. Cl.⁵: **G21B 1/02**

(30) Priority: **21.02.90 US 482780**
**07.12.90 US 624081**

(43) Date of publication of application:
**28.08.91 Bulletin 91/35**

(84) Designated Contracting States:
**AT BE CH DE DK ES FR GB GR IT LI LU NL SE**

(71) Applicant: **IOWA STATE UNIVERSITY RESEARCH FOUNDATION, INC.**
**214 O&L**
**Ames, Iowa 50011 (US)**

(72) Inventor: **Vary, James P.**
**4001 Stonebridge**
**West Des Moines Iowa 50265 (US)**
Inventor: **Spence, John R.**
**412 Welch Street**
**Ames, Iowa 50010 (US)**

(74) Representative: **W.P. THOMPSON & CO.**
**Eastcheap House Central Approach**
**Letchworth, Hertfordshire SG6 3DS (GB)**

(54) Composition of matter having defined energy states.

(57) A composition of matter C, prepared by combining a composition of matter A with composition of matter B, at precisely defined energies, and wherein said energies of A and B are defined by the solutions to relativistic two-particle wave equations utilizing the transverse photon exchange interaction. Compositions of matter A and B each have intrinsic spin quantum number equal to 1/2. Composition C has utility in numerous energy, communication and defense applications.

EP 0 443 836 A2

Jouve, 18, rue Saint-Denis, 75001 PARIS

# COMPOSITION OF MATTER HAVING DEFINED ENERGY STATES

## BACKGROUND OF THE INVENTION

### Field of the Invention

This invention concerns stable compositions of matter which may be prepared by combining or colliding at least two particles, each having defined masses and energies. In one embodiment said resultant particle is a neutral particle itself having defined energy states, and having an extremely high stored energy to mass ratio. These properties make this embodiment useful in numerous energy, communication and defense applications. In another embodiment, the resultant composition has defined low energy states and is useful for purposes of energy generation by fusion.

### Description of the Prior Art

Methods to collide particle beams in devices such as accelerators and storage rings are well known in experimental physics. By way of illustration, studies of colliding beams of matter and antimatter, such as proton-antiproton and electron-positron, have been conducted at a number of facilities around the world.

For example, the patent to Maglich, et al., U.S. Pat. No. 4,788,024, describes electron-electron, proton-proton, electron-position and protron-antiprotron colliding beams. This patent purports to describe a method of increasing stored ion densities using electrons to shield positive charges. In particular, this patent states, "stored particles are electrically neutralized, which, in turn, means absence of the repulsion and absence of the space charge limit. Specifically, in this context, the positively charged deuterium ions are mixed with electrons." This and other quotes from this patent provide no hint or suggestion to interact particles at defined energies to produce any of the compositions disclosed herein.

The patent Rich, et al., U.S. Pat. No. 4,864,131, purports to describe a positron microscope. In this patent, very slow positron beams with energies typically around 1 eV are utilized to examine materials by impact. This impact leads to the annihilation of the positrons by electrons in the material, and the generation of signals is indicative of the positioning of the electrons within the material. The patent to Rich, et al., concentrates on the well-known scattering properties and annihilation properties of positrons and electrons. That is, simple implementation of the previously known interactions between positrons and electrons provides the theoretical underpinnings for this positron microscope. Although Rich, et al., discusses the use of "bound states of positronium," they fail to suggest, recognize or appreciate the compositions disclosed herein having significant stability at defined energy states.

In addition, previous theoretical work known in the art has failed to suggest, recognize or appreciate compositions having the specific energy states disclosed herein. For example, the discussion of Wong and Becker, Phys. Lett. B 182, 251 (1986) examined a particular relativistic two-body equation of their own design and showed, for a particle comprised of an electron and a positron in the scattering domain, it would possess a single energy state of extremely short ($10^{-19}$ secs) lifetime. Thus, Wong and Becker, and indeed all others who have examined the issue, have failed to suggest, recognize or appreciate that stable particles disclosed herein may be prepared by combining or colliding particles with intrinsic spin quantum number 1/2 and having defined energies.

It is thus one object of the present invention to produce stable compositions of matter having defined energies by the combination or collision of at least two particles at defined energies, each having spin 1/2 and defined masses.

It is yet another object of the invention to produce a stable high energy composition from the combination or collision of a positron and electron.

It is yet a further object of this invention to produce a stable low energy composition from the combination or collision of an electron and a proton.

It is yet another object of the present invention to produce stable compositions of matter having, as one property, a compactness of size unique to said compositions, which size is not a characteristic of particles defined by normal solutions to the Schroedinger and Dirac equations.

It is still a further object of the present invention to provide methods for producing, and, indeed enhancing the production of, compositions of matter having defined energies formed by the combination or collision of at least two spin 1/2 particles, each having defined masses and energies.

EP 0 443 836 A2

## SUMMARY OF THE INVENTION

A composition of matter C, is prepared by combining a composition of matter A with composition of matter B at specified energies. Composition A is selected from the class of elementary particles and odd mass nuclei having intrinsic spin quantum number 1/2 and positive charge, consisting of protons, positrons, muons with a positive charge, or other leptons having a single positive charge, tritium, $^3$He, $^{13}$C, $^{13}$N and so on. Composition B is selected from the class of elementary particles and odd mass anti-nuclei having intrinsic spin quantum number 1/2 and negative charge, consisting of antiprotons, electrons, muons with a negative charge, and other leptons having a single negative charge, antitritium, anti-$^3$He, anti-$^{13}$C, anti-$^{13}$N and so on. The specified center of mass energies for combining A and B are obtained from the solutions to relativistic two-particle wave equations utilizing the transverse photon exchange interaction as described herein. Composition C may have net charge, either positive or negative, depending on the charges of composition A and composition B.

As will become apparent, the spin of the particles A and B is important. The relativistic wave equations presented herein treat compositions A and B with the intrinsic spin quantum number equal to one-half. The addition of a neutron to composition A (when composition A is a proton) is not expected to disturb the system described herein, except that the resonant energies of composition C are expected to be shifted downward slightly.

## DETAILED DESCRIPTION OF THE INVENTION

Compositions of matter are prepared in a manner shown by the equation:
$$A + B = C.$$
One of each of A and B is selected for combination or collision at very specific masses and energies to form states of matter which are designated composition C having specific energy states. (As one skilled in the art would understand, the masses and energies of relativistic particles are easily interconverted by multiplication with a constant, the square value of the speed of light. Thus, the masses of compositions A and B and the energies of collision determine the energy and mass of composition C.) The energies of A and B are determined by solving certain relativistic two-particle wave equations for charged spin 1/2 particles. The solution of these equations provide precise energies at which A and B must be combined to produce a stable composition C. The energies depend on the masses and charges of A and B chosen to be combined. It is also contemplated that a neutron may be added to composition A (when A is a proton) or an anti-neutron to composition B (when B is an anti-proton) without significantly disturbing the system. The product composition C is expected to have resonant energies shifted downward slightly from those defined by the solution to the relativistic two-particle wave equations without the neutron or anti-neutron present. While two specific examples are discussed hereinafter, as one skilled in the art would understand, the approach provided herein is a general one, which may be extended to numerous and diverse compositions prepared from the members selected from classes of compositions A and B.

In one embodiment in the above equation, composition A represents elementary particles and odd-mass nuclei having a single unit of positive charge. In the case of odd-mass nuclei, composition A may also be selected from multiply-charged nuclei. In particular, composition A may be selected from the class of elementary particles: protons, positrons, muons with positive charge, and other leptons with a single positive charge. Composition A may also be selected from certain nuclei with odd atomic number and spin 1/2 such as tritium, $^3$He, $^{13}$C, $^{13}$N, and so on.

Composition B includes negatively-charged elementary particles: the anti-proton, electrons, muons with negative charge, and other leptons with negative charge. Larger anti-nuclei such as anti-tritium, anti-$^3$He, anti-$^{13}$C, anti-$^{13}$N, etc. may also be used. Composition B may bear a single unit of negative charge and may also be multiply negative charged. Composition B may be selected from the class that includes all the anti-matter substances corresponding to the matter substances in composition A.

All compositions A and B are treated as point-like particles herein. This is an approximation for nuclei which becomes less reliable with larger nuclei. Hence the energies of the states of composition C are given most reliably and the states are most stable when composition A is selected from the lightest nuclei. Composition A may be selected from nuclei as heavy as $^{15}$O or $^{15}$N, depending upon the selection of composition B. For optimal results, if a heavier nucleus is desired for composition A, then a less massive partner should be chosen as composition B and vice-versa.

For the sake of brevity, particles of matter and antimatter are referred to herein simply as "particles" or "compositions." The particles are also described herein as having "defined energies" or "defined energy states," which refer to energies which arise from the solutions of the specific relativistic two-body wave equations described herein. The defined energies or defined energy states referred to herein have not been obtained from conventional non-relativistic or relativistic one-body wave equations. These states are thus distinct from the

3

conventional bound states of the Coulomb interaction such as conventional positronium states or hydrogen states that may be determined by reference to normal solutions to the Schroedinger and Dirac equations.

All energies are quoted herein in the center of mass system. That is, since it may be convenient to work with one accelerated beam of particles impinging on a fixed target in certain applications, the energy of the beam must be selected to achieve the specified center of mass energy. In other applications, colliding beams may be arranged to have this same specified center of mass energy. Additional means can easily be imagined to cause the combinations or collisions to occur at the specified energies. Even a plasma of the components of composition C will have a percentage of the collisions occurring at the specified energies. The percentage is controlled by the plasma temperature distribution which itself is controlled by standard means.

In Example I, a positron and electron are combined at specific energies to form a particle called photonium which is distinct from the well-known particle called positronium. In Example II, a proton and an electron are combined at specific energies to form a particle called protonium which is distinctly different from hydrogen. In both cases, relativistic two-particle wave equations provide the specific energies at which the two substances must be combined to form stable composition C. The stability of composition C is relative to the unstable situation of simple scattering of these two substances; that is, the solutions to the relativistic two particle wave equations indicate that the lifetime of composition C is longer than the certain amount specified below. It is believed, and certain indirect evidence indicates, that some of the embodiments of composition C live at least a week or even longer. As one skilled in the art would understand, many variations upon the examples of compositions described below may be made that still fall within the spirit and scope of this invention. Thus, it is a straight-forward matter to extend the disclosure herein for other compositions C; that is, for any other pair of composition A and B not specifically discussed herein.

The compositions disclosed herein have a compactness of transverse size relative to conventional compositions defined by known relativistic and non-relativistic wave equations. For example, photonium is more compact than positronium and protonium is more compact than atomic hydrogen.

Described herein are relativistic two-particle wave equations for charged spin=1/2 particles. The equations provided herein describe, to a very good approximation, even well-known "Coulomb" bound states and scattering states attributable to all atomic and nuclear particles, including composition C. In other words, all the usual atomic structure states of composition C are well described by these same equations. Only the new states, distinct from those obtained in solving the conventional non-relativistic Schroedinger or relativistic Dirac equations for a single spin=1/2 particle in an external electromagnetic potential, are described herein. Thus, in the two examples outlined below, no discussion of the well known bound states of positronium or of the well known hydrogen atomic states is presented. The new states disclosed herein are distinguishable from the conventional states not only by their specific energies, but also by their short distance and high momentum characteristics.

The question arises now of how to handle composition C. In the two examples provided below, the substances are electrically neutral. However, this is not necessarily true for each composition C. The relativistic wave equations described in the examples may be modified in a simple manner, as is obvious to one skilled in the art, to treat cases where A and/or B have more than one unit of charge. Some of the compositions C may then have a net charge. In these cases, they may be handled by standard electromagnetic fields which are not so strong as to substantially enhance the decay of the states but which are suitable to maneuver them into containers or other storage devices. For example, they can be made into beams of particles.

For the neutral compositions C, it is believed that they experience binding forces with other members of their own class through a Van der Waals type force. This interaction is analogous to the interaction between two neutral atoms which can cause them to bind together to form molecular substances. Thus, two protoniums (a protonium is the particle resulting from the combination, at precise energies, of an electron and a proton) can combine together to form a cluster. It is quite conceivable that, just as one can form a hydrogen ion with an extra electron, so, too, an extra electron may be weakly bound to protonium.

One may form neutral compositions C by two colliding beams. The choice of the angle of intersection and energies of the colliding beams dictates the recoil direction and kinetic energy of composiion C. In this way neutral beams of composition C may be formed with a desired direction and a desired energy.

Electromagnetic fields may be either externally applied or provided by the presence of additional charged particles to enhance the formation of composition C. Similarly, these electromagnetic fields can be used to stimulate the decay of composition C and hence can be used to convert the energy stored back into gamma-ray or other useful kinetic energy output.

Thus, in order to facilitate the formation or decay, one may use intense electromagnetic radiation, such as achieved from the output of a laser device or any other source of strong electromagnetic radiation. As an alternative, one may facilitate the formation or decay by having composition A and composition B combined in the presence of additional charged particles. It is therefore anticipated that a fusion device which incorporates protons, deuterons, and/or tritium in a system with electrons and laser light may be so used. In a system where composition C is formed, one may desire to use an additional stimulus to promote interactions between this composition and other materials, such as in the fusion device. It is believed that ultrasound could be used in this context.

In summary then, a class of substances is prepared through the interaction or collision, termed "combination," between a small, even point-like, positively charged particle with a small, even point-like, negatively charged particle each with intrinsic spin quantum number equal to 1/2 at very short distances compared with the atomic scale. When combined at specific energies, one forms composition C with very long lifetimes. The substances can be either neutrally charged or have net charge on them depending upon the number of additional particles present. The utility of these substances is outlined below in two cases – one called photonium and the other called protonium. Numerous other compositions can be generated within this same framework.

Since the individual compositions A and B can be accelerated, and guided on very precise trajectories with current accelerator technology, the resulting composition C can have very precisely determined kinetic energy and direction. Thus, for example, one may make a neutral particle beam of composition C, an extremely valuable tool of unprecedented scope. To date no other neutral particle beam of such potential energy density, collimation and energy resolution is known or has been proposed. Such a particle beam has implications for long distance communication (even over astrophysical distances), and long-distance transmission of energy through space.

Such a neutral beam, as, for example, a neutral beam of photonium, may travel over distances of many light years while still maintaining phase coherence. This is due, in part, to the compact and neutral nature of the particles in a photonium beam -- thereby rendering them relatively inert for interaction with other matter in the sparse intergalactic medium. Good energy resolution and/or high energy of the photonium beam is also required for maintaining phase coherence, but this is a straight-forward matter of accelerator technology. In the case of pulsar signals, the high energy is responsible for the phase coherence. The chief advantages of using a photonium beam for communications are: 1) the beam will experience less dispersive scattering in the atmosphere than a beam of photons; 2) any dispersed beam loses phase coherence so eavesdropping is inhibited; and 3) a single photonium, due to its potential for large energy release, will be easier to detect than a single photon.

## EXAMPLE I: Electron + Positron = Photonium

### A. Energy States of Photonium

In this example, A is a positron and B is an electron which are combined or collided to produce composition C, which is termed "photonium." Solutions of three relativistic two-particle wave equations described below provide stable high energy states at least at six particular energies. Many more solutions are also possible. For convenience, in this system, energies of photonium are quoted in units of the total mass of the system, reported in millions of electron volts (MeV). These particular six states of photonium occur at the mass values of 1.351, 1.498, 1.659, 1.830, 2.009, and 2.195 MeV.

Relativistic wave equations described herein provide properties of composition C. In a first calculation, the Tamm-Dancoff equation (TD) is the relativistic wave equation used. In a second calculation, the Breit equation with projection of the positive frequency components is used. In a third calculation, a Blankenbeckler-Sugar form of the Breit equation is used. The properties of composition C so defined are consistent as viewed from all three equations. As provided by these equations, and upon utilizing a transverse photon exchange interaction in each equation, the precise energies for composition C (and hence A and B) have been determined and composition C is determined to have considerable stability. It appears essential to include the treatment of the transverse photon exchange interaction as described below in order to obtain the energies of these stable resonant states of composition C.

The methods of solution, outlined below, are successful for use with all three equations in determining the resonant state locations. With respect to the stability of the states of composition C, it can be shown that these equations predict the lifetimes of scattering resonances to be infinite (J.R. Spence and J.P. Vary, Physics Letters B, Vol. 254, Nos.1&2, pp. 1-6, published 17 January 1991). This is to be regarded with care since the equations represent only an approximation to the complete theory as as will be described below. A more precise approach which includes more effects from the full theory would be expected to give a finite lifetime. Evidence from experiments, whose significance has previously been unrecognized and unappreciated, demonstrates that at least one of the defined energy states of photonium has a lifetime longer-than a few days.

In the first calculation, an equation (the "TD equation") which follows from the Tamm-Dancoff (TD) method, as described in I. Tamm, J. Phys. U.S.S.R. 9, 449 (1945); S. M. Dancoff, Phys. Rev. 78, 382 (1950), is solved.

In a second calculation, a factor in the TD equation is set equal to unity to yield an equation used in atomic physics and known as the no-pair approximation to the Breit equation. The Breit equation is described in G. Breit, Phys. Rev. 34, 553 (1929); Phys. Rev. 36, 383 (1930); Phys. Rev. 39, 616 (1932). A Blankenbeckler-Sugar equation (Bb-S), which is a specific form of a Bethe-Salpeter equation, is also constructed, as described in R. Blankenbeckler and R. Sugar, Phys. Rev. 142, 1051 (1966), to provide yet a third calculation. Three different relativistic two-body equations are provided in order to provide flexibility in the procedures for determining the energies of compositions C and their properties. These compositions C are consequences of the fundamental relativistic quantum theory of electrodynamics, referred to as Quantum Electrodynamics, or "QED." The three equations represent different reasonable approximations to QED. These different approximations are presented because there are, to date, no reported exact solutions to QED.

Working in the center of momentum (CM) frame, the TD equation represents a complete treatment of QED through the Fock space of states with an electron, a positron and with zero or one photon. Higher Fock states are neglected. The TD equation is not merely a three-dimensional reduction of a Bethe-Salpeter (B-S) equation, as described in E. E. Salpeter and H. A. Bethe, Phys. Rev. 84, 1232 (1951).

All three equations include a term incorporating certain transverse photon exchange effects. When the equations are solved without this term, no resonances are obtained. There are no adjustable parameters in these calculations. By obtaining scattering solutions in a basis of cubic B-splines, the results may be verified as are stable against reasonable variations in the B-spline basis.

In the CM frame, the TD equation becomes

$$[E - 2E(\bar{q})]\Lambda_a^+(\bar{q})\Lambda_b^+(\bar{q})\phi(\bar{q})$$

$$= \Lambda_a^+(\bar{q})\Lambda_b^+(\bar{q}) \int d^3q' V(\bar{q},\bar{q}')\Lambda_a^+(\bar{q}')\Lambda_b^+(\bar{q}')\phi(\bar{q}').$$

The $\Lambda^+(\vec{q})$ $(\Lambda^-(\vec{q}))$ are projection operators that project positive (negative) energy free particle states and are defined by

$$\Lambda_a^\pm(\bar{q}) = \frac{1}{2}\left[1 \pm \frac{\bar{\alpha}_a \cdot \bar{q} + \beta_a m}{E(\bar{q})}\right]$$

$$\Lambda_b^\pm(\bar{q}) = \frac{1}{2}\left[1 \pm \frac{-\bar{\alpha}_b \cdot \bar{q} + \beta_b m}{E(\bar{q})}\right]$$

$$E(\bar{q}) = +(m^2 + \bar{q}^2)^{\frac{1}{2}}.$$

The kernel $V(\bar{q},\bar{q}')$ represents the interaction between the particles, and denoting $\alpha^0 = \beta$, the matrices $\alpha_a^\mu$ and $\alpha_b^\mu$ satisfy

$$\alpha_a^\mu \alpha_a^\nu + \alpha_a^\nu \alpha_a^\mu + = 2\delta^{\mu\nu}$$

$$\alpha_b^\mu \alpha_b^\nu + \alpha_b^\nu \alpha_b^\mu + = 2\delta^{\mu\nu}$$

$$\alpha_a^\mu \alpha_b^\nu - \alpha_b^\nu \alpha_a^\mu + = 0$$

where $\mu,\nu = 0, 1, 2, 3$.

The kernel. $V(\bar{q},\bar{q}')$ is the sum of three terms. Using $\bar{k} = \bar{q} - \bar{q}'$ the first term is:

$$V_1(\vec{q},\vec{q}') = \frac{+e^2}{(2\pi)^3} \frac{\vec{\alpha}_a \cdot \vec{\alpha}_b}{k^2} F(\vec{q},\vec{q}';E)$$

with

$$F(\vec{q},\vec{q}';E) = 1 - \frac{E(\vec{q}) + E(\vec{q}') - E}{k + E(\vec{q}) + E(\vec{q}') - E}$$

The second term, $V_2(\overline{q},\overline{q}')$, has the form:

$$V_2(\vec{q},\vec{q}') = \frac{-e^2}{(2\pi)^3}\left(\frac{\vec{\alpha}_a \cdot \vec{k} \otimes \vec{\alpha}_b \cdot \vec{k}}{k^4}\right) F(\vec{q},\vec{q}';E)$$

Finally, $V_3(\overline{q},\overline{q}')$ is the usual Coulomb term

$$V_3(\vec{q},\vec{q}') = \frac{-e^2}{(2\pi)^3}\frac{1}{k^2}$$

The foregoing equations define the TD equation, the most complete treatment of QED, among the three equations presented herein.

In order to elucidate the physics underlying the compositions C (which are obtained as resonances in the scattering of compositions A and B), two model approximations to the TD equation are considered, each of which results in a relativistic wave equation which may be more familiar and can be derived through alternative schemes using the B-S equation as the starting point.

The second relativistic two-hody wave equation is well known in atomic physics, as described in J. Sucher in "Relativistic, Quantum, Electrodynamic, and Weak Interaction Effects in Atoms," edited by W. Johnson, P. Mohr, and J. Sucher (American Institute of Physics, New York, 1989), p. 28 and references therein, and may be referred to as the "no pair form of the Breit equation." This treatment is performed by approximating $F(\vec{q},\vec{q}';E) = 1$. It has been established that even with this approximation one obtains a good description of the bound states of positronium, as described in H. A. Bethe and E. E. Salpeter, "Quantum Mechanics of One and Two Electron Atoms" (Springer, Berlin, 1957).

The second calculation may also be performed by making an instantaneous approximation, as described in E. E. Salpeter, Phys. Rev. 87, 328 (1952), (IA) to the B-S equation in the radiation gauge. The third calculation can be performed by constructing a corresponding Bb-S reduction. Note that $F(q,q'; E) = 1$ in this model as well. This results in an equation which can be referred to as the "Bb-S equation" and it has the form:

$$\left[E - \frac{\vec{q}^2}{m}\right]\Lambda_a^+(\vec{q})\,\Lambda_b^+(\vec{q})\,\overline{\phi}(\vec{q})$$

$$= \Lambda_a^+(\vec{q})\,\Lambda_b^+(\vec{q})\int d^3q'\,\overline{V}(\vec{q},\vec{q}')\,\Lambda_a^+(\vec{q}')\,\Lambda_b^+(\vec{q}')\overline{\phi}(\vec{q}').$$

The amplitude $\overline{\phi}(\vec{q}')$ and the kernel $\overline{V}(\vec{q},\vec{q}')$ are given by

$$\overline{\phi}(\vec{q}') = \sqrt{m/E(\vec{q}')}\,\phi(\vec{q}')$$

$$\overline{V}(\vec{q},\vec{q}') = \sqrt{m^2/E(\vec{q})E(\vec{q}')}\,V(\vec{q},\vec{q}').$$

Working with the Bb-S equation has the advantage that if $V_2$ is neglected a fully covariant wave equation may be obtained whose partial wave decomposition is a standard topic of relativistic nuclear physics, as described in J. J. Kubis, Phys. Rev. D 6, 547 (1972); K. Erkelenz, Phys. Reports 13 C, 191 (1974); M. J. Zuilhof and J. A. Tjon, Phys. Rev. C 22, 2369 (1980); and R. Machleidt, K. Holinde and Ch. Elster, Physics Reports 149, 1 (1987).

The relative orbital angular momentum between the electron and the positron is called L, while the combined spin of the electron and the positron is called S, and the total angular momentum of the system is called J. For a partial wave with fixed L, S, and J the R-matrix equation (sometimes referred to as the K-matrix equation) may be written for each of these calculations as R = V + VGR with

$$R = R(\overline{q},\overline{q'}) = < q; LSJM \mid R \mid q'; LSJM>$$
$$V = V(\overline{q},\overline{q'}) = < q; LSJM \mid V \mid q'; LSJM>,$$

and G is the propagator appropriate to the calculation. The R-matrix equations may be solved by methods described below for the J = 0, L = 1, S = 1 channel of photonium by expansion in a basis of 31 cubic B-splines, as described in C. DeBoor, A Practical Guide to Splines (Springer, Berlin, 1978), using a Galerkin, as described in K. E. Atkinson, A Survey of Numerical Methods for the Solution of Fredholm Equations of the Second Kind (SIAM, Philadelphia, 1976), method developed for the nonrelativistic case, as described in W. D. Heiss and G. M. Welke, J. Math. Physics 27, 936 (1986). The factor of $k^{-4}$ in $V_2$ was written as

$$\frac{1}{k^{4}} \approx \left\{ \begin{matrix} -\lim \\ \mu \rightarrow 0 \end{matrix} \right\} \frac{\partial}{\partial \mu^2} \frac{1}{(k^2 + \mu^2)}$$

and then it was converted to an integrodifferential operator, as described in J. R. Spence and J. P. Vary, Phys. Rev. D 35, 2191 (1987). Finally, the necessary integrals were evaluated using methods developed for the treatment of quarkonium, as described in J. R. Spence (Ph.D. Thesis, Iowa State University, 1989, available through University Microfilms International, Ann Arbor, Michigan).

In practice there are a number of difficulties in such a treatment due to the singular behavior of the kernel and the R-matrix at zero momentum transfer and due to the relatively large value of the kernel at large momentum transfer. For these reasons, it is desirable to use analytic procedures whenever possible. The operation is performed to solve for the half-shell R-matrix, R(q,q'), which in the Bb-S approach is related to the phase shift through

$$\tan \delta = - \tfrac{1}{2}\pi q K(q,q).$$

Setting $V_C = V_1 + V_3$ and $V_B = V_1 + V_2 + V_3$, $R_C$ and $R_B$ may be solved for separately, thereby obtaining $\tan\delta_C$ and $\tan\delta_B$. From these, the following is obtained:

$$\tan(\delta_B - \delta_C) = \frac{\tan\delta_B - \tan\delta_C}{1 + \tan\delta_B \tan\delta_C}$$

In principle, it is necessary to regularize in order to make this procedure well-defined. However, working in a spline basis and performing integrals analytically appears adequate. Tan $(\delta_B - \delta_C)$ was nearly zero between resonances.

A resonance is defined to occur when the calculated phase shift $(\delta_B - \delta_C)$ increases abruptly by p. Resonances in the TD equation occur at invariant total masses equal to 1.351, 1.498, 1.659, 1.830, 2.009, and 2.195 MeV. Resonances in the second and third calculations occur at masses differing only in the fifth significant figure from those of the TD equation. The mass ranges below 1.35 MeV and above 2.25 MeV provide additional resonances. However, numerical methods commonly utilized may have decreasing accuracy in those ranges, and these additional resonances cannot be defined with as high a precision at this time.

As seen above, these solutions are obtained for a particular configuration of the electron and the positron designated by L, S, and J. The configuration corresponding to these six states is designated by L=1, S=1 and J=0. As one skilled in the art would anticipate, other configurations (i.e., other L, S and J combinations) may also have stable states. It is yet further anticipated that additional stable states of these systems occur at energies above and below the range of masses quoted above. Based on the foregoing, it is a straight-forward matter of solving these equations in these other mass ranges to find these additional stable states as one skilled in the art would understand.

The stability of each of these states is best determined through a procedure in which the photon is given a small mass and the resonances are studied in the limit where this mass vanishes (J.R. Spence and J.P. Vary, Physics Letters B, Vol. 254, Nos. 1&2, pp. 1-6, published 17 January 1991). When this is done, these states are found to have infinite lifetimes. It is known that resonances with infinite lifetimes ("continuum bound states") are generated in analytical solutions of certain nonlocal or long-range potentials in nonrelativistic scattering theory, as described in B. Bagchi, B. Mulligan, and R. G. Seyler, Phys. Rev. C 26, 14 (1982). Since these equations feature both nonlocal and long-range interactions it is possible that the infinite lifetime arises for the same reasons. These equations do not represent all the QED processes. By including additional QED process in these equations through theoretically well-defined procedures (analogous to evaluating QED corrections to bound states of positronium), it is expected that a finite but long lifetime will emerge from the theory. In fact, by studying astrophysical data, which appears to be understandable only in terms of these states of photonium, it is believed that one, and possibly more, of the states of this system live for at least one week and possibly much longer. As would be apparent, the lifetime of these states is an issue of some importance for certain applications of these states of photonium. Altogether, the theoretical and experimental evidence combine to indicate that some states of photonium are sufficiently stable to be of considerable importance for certain applications.

Photonium is a stable configuration of matter and anti-matter. Thus, forming these states represents an energy storage mechanism of great utility. In particular, when one causes these states to decay, the entire energy of the masses of these states can be obtained as useful energy. For example, the electron and positron can be induced to annihilate each other and give rise to electromagnetic energy in the form of photons. Alternatively, the positron in photonium can be-induced to annihilate with an electron inside of a material again yielding photons. These photons can be utilized to heat matter, cause nuclear reactions to occur, or be used for other purposes where photons have traditionally been used. Just one such application is cancer therapy.

The photonium system is an extremely compact system. Its transverse dimension is approximately 1/1000 of the transverse size of an ordinary atom, or of ordinary positronium. Thus, it is further anticipated that one may store a great quantity of these photonium particles in a small volume making it a highly compact and high energy-density storage device.

## B. Preparing and Handling Photonium

Due to the fact that the technology to produce, accelerate, store and guide intense beams of energetic electrons and positions is a mature technology, it is a straight-forward matter to combine two such beams in a co-moving geometry with the relative energy chosen to form a state of photonium. The resulting directed high energy neutral beam would be useful for transmitting energy over large distances through space with little energy loss during transmission.

The issue of the lifetime of the resonance states of photonium is also connected to the issue of the probability of formation of these resonances in a given physical system. In particular, the longer the lifetime then the smaller the probability of formation in a scattering situation. On the one hand, one wants a longer lifetime for greater stability of these systems. On the other hand, one wants a larger probability of formation to make it easier to manufacture these substances on a large scale. Having developed this understanding of photonium to this stage, a great deal of experiments that have hitherto been unexplained may concern composition C. In the process of studying these experiments, it is believed that photonium is produced in heavy ion experiments as well as in pulsars (pulsating compact stars), but which have been heretofore unexplained, unrecognized and unappreciated. In both cases, it appears that, the production occurs in the presence of very strong electromagnetic fields which will affect the lifetime and formation probability of composition C. From these experiments, it appears that these fields are strong enough to make the production of these states relatively easy. Hence, it seems reasonable that, in order to produce these substances, it could be optimal to have composition A and composition B combined in the presence of a strong electromagnetic field. This increases the probability of formation. At the same time, it increases the probability of decay of composition C back to the primordial substances, A and B. In a particular experimental situation, some dynamical equilibrium between the rate of A+B=C and C=A+B will occur. Once composition C has been obtained, it should be separated from the electromagnetic field so that it would not be induced to decay. This is believed to be what happens in the case of pulsars and heavy ion experiments to a certain extent. In the case of pulsars, the states live long enough to travel to the earth at very high velocities. Upon entering the earth's atmosphere or the earth's surface, they collide with molecules of material and decay. Since the photonium survives the interstellar trip to the earth (a trip encountering only small electromagnetic fields), it is believed that it has a very long lifetime in a low field environment. Once it enters the earth's atmosphere at very high velocities, it goes through a scattering process with electrons and nuclei in the atmosphere or the earth's surface and is caused to decay.

Another set of experiments which have hitherto been unexplained and unappreciated may also be interpreted in light of the above-discussion as revealing this same feature of photonium. Numerous recent experiments have attempted to scatter positrons from atomic electrons and to measure long-lived resonant states formed by positrons and electrons. The experiments have yielded conflicting results. Some researchers claim to see such states while others, with greater precision, claim to rule them out. Upon closer inspection there appears to be a resolution to this paradox based on photonium and its very long lifetime. Experiments which are not designed to account for the positron scattering from other charged particles before photonium formation fail to observe any long-lived states. On the other hand, those experiments which have some sensitivity to interactions which occur in the presence of other charged particles, while failing to recognize or appreciate their significance, have had some success in observing some long lived states. In this case, the presence of the additional charged particles serves the role of the external fields in enhancing the formation rate (and the decay rate) of photonium.

Since positrons interacting with electrons at energies specified by the solutions of the equations described above is a promising method for producing photonium, it is important to summarize the key features of the successful experiments just mentioned. A beam of positrons from an accelerator or a radioactive positron emitter impinges upon a target such as beryllium or a heavy atomic species, such as thorium. To increase the enhancement for photonium production, it appears advantageous to use heavy atoms such as uranium and thorium. For heavy atoms, the electron-electron correlation function is large for inner shell electrons which promotes reasonance formation shortly after scattering has occurred from one of the electrons. The beam energies must be high enough so that enough energy is available to produce the desired photonium mass. If the positron-electron interaction occurs in the absence of a strong electromagnetic field and a reasonant state is formed ("free-space formation mode"), the reasonant state (i.e. photonium) would be moving very fast in the laboratory frame as dictated by the laws of energy and momentum conservation. The experiments that fail to observe these resonant states are designed to primarily detect the decay of these fast-moving resonances formed in the free space mode. The failure to see the resonances, even if they are produced via the free-space formation mode, is due to the fact that the particles so produced live too long to decay within the lifetime range that these experiments are sensitive to. In view of the fact discussed above that the long lifetime implies a small formation rate, one concludes that designing a system to produce photonium via the free-space formation mode is not likely to be as efficient as the method described below.

On the other hand, if the incident positrons first collide with another charged particle and are decelerated, resonance formation with an atomic electron ("external field formation model"), occurs at greatly reduced laboratory energy and momentum. The external field provided by the additional charged particle acts to stimulate production and decay of photonium by lowering the lifetime. The signature of this external field formation mode is that the photonium, should it decay, could provide the emission of a positron and an electron which are back to back in the laboratory frame. Of the reports of experiments, which are interpreted herein as having produced photonium via this external field formation mode, but whose authors fail to recognize or appreciate the same, the most convincing evidence for this back-to-back decay appears in Chr. Bargholtz et al., Phys Rev. C40, 1188 (1989). In this paper, the authors fail to appreciate any of their findings as indicative of photonium production and fail to appreciate they were observing fruitful mechanisms for production outlined above.

From the foregoing, it is apparent that photonium may be produced in the external field formation mode utilizing external electromagnetic field either provided by a nucleus, by atomic electrons, or by a suitable electromagnetic field device. The use of the external field enhances the formation rate. In the case of the nucleus or the atomic electrons, as outlined above, there are two apparent advantages. First, the photonium can be produced at rest, or nearly so, in the laboratory frame, thus, making it easier to collect after production. Second, the energy required of the positron beam is lower since little or no energy is delivered to translational kinetic energy of the recoiling photonium which would be required in the free-space formation mode. These same advantages may also be achieved in an electron-positron colliding beam apparatus with a strong electromagnetic field active at the beam intersection region. These principles also apply to protonium, discussed below, or any other composition C.

EXAMPLE II: Electron + Proton = Protonium

In this example, composition A is a proton and composition B is an electron, which are combined to produce composition C, which in this case is termed "protonium." Almost identical considerations apply if composition A is a positron and composition B is an anti-proton. The solution to the same relativistic two-particle wave equations as those discussed in Example I above, modified to reflect the fact that compositions A and B do not have the same masses here, provide five long-lived states. The equations are solved for the same configurations as in the electron-positron case, that is, J=0, L=1, S=1. The relative energy between the electron and the proton for the energy of these states, are: 0.748, 1.347, 2.095, 3.032, and 4.707 eV. A neutron may be added to protonium while only shifting these energies downward slightly when the neutron is approximated as a spectator to the proton.

Treating the proton and electron as pure Dirac particles, the unequal mass version of any one of the three relativistic wave equations described above may be successfully used to obtain the energy states of protonium. For illustration, the unequal mass version of the Bb-S equation, which can be obtained in a number of ways, is outlined. One simple way is to begin with the instantaneous approximation to the B-S equation in the radiation gauge. By inserting projection operators one arrives at the "no-pair" equation, which can be written in the center of momentum (CM) frame with $\vec{q}$ as the relative momentum vector:

$$[E - E_e(\bar{q}) - E_p(\bar{q})]\Lambda_e^+(\bar{q})\Lambda_p^+(\bar{q})\phi(\bar{q})$$

$$= \Lambda_e^+(\bar{q})\Lambda_p^+(\bar{q}) \int d^3q' V(\bar{q},\bar{q}')\Lambda_e^+(\bar{q}')\Lambda_p^+(\bar{q}')\phi(\bar{q}').$$

The $\Lambda^+(\vec{q})$ ($\Lambda^-(\vec{q})$) are protection operators that project positive (negative) energy-free particle states of the electron and proton and are defined by

$$\Lambda_e^{\pm}(\bar{q}) = \frac{1}{2}\left[1 \pm \frac{\vec{\alpha}_e\cdot\bar{q} + \beta_e m}{E_e(\bar{q})}\right]$$

$$\Lambda_p^{\pm}(\bar{q}) = \frac{1}{2}\left[1 \pm \frac{-\vec{\alpha}_p\cdot\bar{q} + \beta_p M}{E_p(\bar{q})}\right]$$

$$E_e(\bar{q}) = + (m^2 + \bar{q}^2)^{\frac{1}{2}}.$$
$$E_p(\bar{q}) = + (M^2 + \bar{q}^2)^{\frac{1}{2}}$$

where m(M) represents the electron (proton) mass. The kernel $V(\vec{q}'\cdot\vec{q}'')$ represents the interaction between the particles, and denoting $\alpha^0 = \beta$, the matrices $\alpha_e^\mu$ and $\alpha_p^\mu$ satisfy

$$\alpha_e^\mu\alpha_e^\nu + \alpha_e^\nu\alpha_e^\mu = 2\delta^{\mu\nu}$$

$$\alpha_p^\mu\alpha_p^\nu + \alpha_p^\nu\alpha_p^\mu = 2\delta^{\mu\nu}$$

$$\alpha_e^\mu\alpha_p^\nu - \alpha_p^\nu\alpha_e^\mu = 0$$

where $\mu,\nu = 0, 1, 2, 3$.

The kernel $V(\vec{q}\cdot\vec{q}')$ is the sum of three terms. Using $\vec{k}=\vec{q}-\vec{q}'$, the first term is:

$$V_1(\bar{q},\bar{q}') = \frac{+e^2}{(2\pi)^3}\frac{\vec{\alpha}_e\cdot\vec{\alpha}_p}{k^2}$$

The second term, $V_2(\vec{q},\vec{q}')$, has the form:

$$V_2(\bar{q},\bar{q}\,') = \frac{-e^2}{(2\pi)^3}\left(\frac{\bar{\alpha}_e\cdot\bar{k}\otimes\bar{\alpha}_p\cdot\bar{k}}{k^4}\right)$$

Finally, $V_3(\vec{q},\vec{q}\,')$ is the usual Coulomb term

$$V_3(\bar{q},\bar{q}') = \frac{-e^2}{(2\pi)^3}\frac{1}{k^2}$$

Next, a corresponding Bb-S reduction can be constructed, as described in R. Blankenbecler and R. Sugar, Phys. Rev. 142, 1051 (1966), using m= mM/ (m+M), to obtain the Bb-S equation:

$$\left[E - \frac{\bar{q}^2}{2\mu}\right]\Lambda_e^-(\bar{q})\,\Lambda_p^+(\bar{q})\,\bar{\phi}\,(\bar{q})$$

$$= \Lambda_e^+(\bar{q})\,\Lambda_p^-(\bar{q})\int d^3q\,'\,\bar{V}(\bar{q},\bar{q}\,')\,\Lambda_e^+(\bar{q}\,')\,\Lambda_p^-(\bar{q}\,')\bar{\phi}\,(\bar{q}\,').$$

The amplitude $\bar{\phi}(\bar{q}')$ and the kernel $\bar{V}(\bar{q},\bar{q}')$ are given by

$$\bar{\phi}(\bar{q}\,') = \left[\frac{mM}{E_e(\bar{q}\,')E_p(\bar{q}\,')}\right]^{\frac{1}{4}}\phi(\bar{q}\,')$$

$$\bar{V}(\bar{q},\bar{q}\,') = \left[\frac{m^2M^2}{E_e(\bar{q}\,')\,E_p(\bar{q}\,')\,E_e(\bar{q})\,E_p(\bar{q})}\right]^{\frac{1}{4}}v(\vec{q},\vec{q}\,')$$

The immediately preceeding equations define the Bb-S model. The unequal mass versions of the TD equation and the no-pair form of the Breit equation could also be solved for protonium and would yield the same states to a high level of precision as obtained from the Bb-S equation. This is true for any composition C so it is a matter of convenience which equation to choose to solve. Although the TD equation represents a complete CM treatment of two Dirac particles interacting through one photon exchange in QED, it also involves more than an order of magnitude greater computational effort to solve. The relativistic Coulomb scattering problem in momentum space is difficult and the additional challenge of solving it at low energies is addressed, therefore, the simplest model from the photonium application (described above) is adopted for the protonium application.

For a partial wave with fixed L, S, and J the R-matrix equation may again be written as R = V + VGR and G has the same form as the usual nonrelativistic progagator. The R-matrix equations are again solved for the J = 0, L = 1, S = 1 channel of protonium by methods described above.

Resonances defined as in Example 1 occur at CM energies for protonium equal to 0.748, 1.347, 2.095, 3.032, and 4.707 eV.

The solutions to these equations for protonium states can be examined in the same manner as the photonium example in order to extract the lifetime. That is, the photon is given a small mass and the lifetime is evaluated as a function of the decreasing photon mass. Since the analytic structure of the protonium and photonium applications is the same, the lifetime goes to infinity as the photon mass goes to zero. Again improvements in the theory to incorporate more processes from QED would give these states a finite lifetime but the final answer is expected to be a lifetime which is long enough for many practical applications. Here there appears to be no data to rely on to indicate the true lifetime of these states of protonium. As in the case of photonium, it is expected, and one skilled in the art would understand, that additional states may occur at energies below and above the energies described herein and also that states occur in other configurations.

In the case of protonium, the energies are much lower than the case of photonium. In addition, it appears that the electrons orbit the proton in an extremely tight configuration, and this makes protonium useful for a somewhat unique set of applications. That is, the transverse dimension of protonium appears to be comparable to the transverse dimension of photonium. In this case, the electron can be viewed as screening the long-range Coulomb interaction of the proton and this will have dramatic consequences for fusion. In particular, by forming protonium at these low energies, one has, at a very low cost in energy consumption, formed a state of matter which fuses relatively easily with another nucleus such as deuterium or tritium. Thus, it is anticipated that devices may be constructed in which electrons are caused to interact with protons at these specific energies and then the neutral systems formed are brought into contact with deuterium and tritium nuclei so as to allow fusion reactions to take place. The theoretical energy yield from such a system can exceed a million to 1. Thus, protonium is a class of matter which would be highly useful in a suitable energy generation device.

It is now accepted practice to bring beams of electrons into contact with beams of protons at very precisely controlled relative energies, in an apparatus called the "cooler." Such an apparatus may readily be configured to form beams of protonium by appropriate selection of the relative energies between the electron and the proton beams. This would then result in a protonium beam.

## Claims

1. A composition of matter photonium, having energy states separate and distinct from those dictated by the normal Schroedinger and Dirac solutions for positronium.

2. A composition as claimed in claim 1 formed by a combination of an electron and a positron at a relative energy value of 1.351, 1.498, 1.659, 1.830, 2.009, or 2.195 MeV.

3. A composition of matter protonium, having energy states separate and distinct from those dictated by the normal Schroedinger and Dirac solutions for atomic hydrogen.

4. A composition as claimed in claim 3 formed by a combination of an electron and a proton at a relative energy value of 0.748, 1.347, 2.095, 3.032, or 4.707 eV.

5. A composition of matter C, prepared by combining a composition of matter A with another composition of matter B, wherein A is selected from a class of elementary particles and nuclei having intrinsic spin 1/2 and positive charge consisting of: protons, positrons, muons with a positive charge, other leptons having a single positive charge, tritium, $^3$He, $^{13}$C and $^{13}$N, and wherein B is selected from a class of elementary particles and anti-nuclei having intrinsic spin 1/2 and negative charge consisting of: antiprotons, electrons, muons with a negative charge, other leptons having a single negative charge, and anti-tritium, anti-$^3$He, anti-$^{13}$C and anti-$^{13}$N, and wherein the energy of C is defined by solutions to relativistic two-particle wave equations utilizing a transverse photon exchange interaction, which solutions are distinct from solutions obtained from normal solutions to the Schroedinger equation and Dirac equation.

6. A composition as claimed in claim 3, combined with a neutron.

7. A composition as claimed in claim 5, combined with a neutron.

8. A method to produce a composition of matter C, by combining a composition of matter A with another composition of matter B, wherein A is selected from a class of elementary particles and nuclei having intrinsic spin 1/2 and positive charge consisting of: protons, positrons, muons with a positive charge, other leptons having a single positive charge, tritium, $^3$He, $^{13}$C and $^{13}$N, and wherein B is selected from a class of elementary particles and anti-nuclei having intrinsic spin 1/2 and negative charge consisting of: antiprotons, electrons, muons with a negative charge, other leptons having a single negative charge, and anti-tritium, anti-$^3$He, anti-$^{13}$C and anti-$^{13}$N, and wherein the energy of C is defined by solutions to relativistic two-particle wave equations utilizing a transverse photon exchange interaction, combining composition A with composition B is performed in the presence of an electromagnetic field.